# EUROPÄISCHE PATENTANMELDUNG

(11) **EP 0 556 943 A1**
(43) Veröffentlichungstag der Anmeldung: **25.08.1993**
(21) Anmeldenummer: 93250052.3
(22) Anmeldetag: 17.02.1993
(51) Int. Cl.: H04N 1/40

(54) **Verfahren und Schaltung zum Erzeugen von Bild-Informationen (pixmaps)**

(30) Priorität: 17.02.1992 DE 4205085
(71) Anmelder: MANNESMANN Aktiengesellschaft, D-40027 Düsseldorf (DE)
(72) Erfinder: Gucza, Erwin, W-2114 Hollenstedt (DE)
(74) Vertreter: Presting, Hans-Joachim, Dipl.-Ing.

(57) **Zusammenfassung**

Bei einem Verfahren zum Erzeugen von Bild-Informationen (pixmaps) über Raster aus Flächenelementen, deren Mittelpunkte eine Linie bilden, die unter einem Winkel (10) zum Bildrand einer Bildvorlage (1) verläuft, ferner über Rasterweiten bzw. unterschiedlich große Raster werden unterschiedliche Helligkeiten durch Aufteilen von Bezugsflächen in weiße oder schwarze Teilflächen dargestellt, aus denen ein Bild aufgebaut wird.

Um nicht nur nach Übertragung auf ein geeignetes Aufzeichnungsmedium als Druckform zur Reproduktion von digitalisierten Bildern zu gelangen, sondern auch eine feinstmögliche Abstufung von Tonwerten zu erlauben, wird vorgeschlagen, daß eine Vielzahl von Mustern (5) in einem Mustergenerator (3) in einer Einzel-bit-Organisation gespeichert wird und daß aus dem Mustergenerator (3) jeweils dasjenige Flächenelement (6) als Einzelbit ausgewählt wird, welches Element des Musters ist, dessen Helligkeit identisch zur vorgegebenen Helligkeitsinformation entsprechend dem Element (2) der Bildvorlage (1) ist und dessen Position im Muster (5) berechnet wird.

## Beschreibung

Es ist bekannt, gedruckte Bilder aus Rastern herzustellen. Entsprechend in Pixel aufgelöste Bilder können auch auf Bildschirmen abgebildet werden. Die gedruckten Bilder bestehen aus Rasterpunkten, die aus Pixeln (z.B. 16 x 16 µ) zusammengesetzt sind. Derartige Bilder aus Rastern bzw. Pixeln bilden Flächenelemente, deren Mittelpunkte auf einer Linie liegen, die unter einem Winkel zum Bildrand verläuft. Druckvorlagen dieser Art sind immer nur schwarz/weiß. Von Schwarz abweichende Farben entstehen durch das Übereinanderdrucken von in der Regel vier Druckvorlagen, die mit jeweils einem eigenen Rasterwinkel erzeugt werden und mit den Farben Zyan, Magenta, Gelb und Schwarz gedruckt werden. Eine Beeinflussung der Hell-Dunkel-Zonen eines Bildes wird durch Abstände der Rasterpunkte, d.h. durch die Rasterweiten vorgenommen. Diese Rasterweiten bestimmen außerdem die angestrebte Druckqualität und die drucktechnische Umgebung, wie z.B. die Papierqualität. Helligkeiten werden ausschließlich durch Aufteilen von Bezugsflächen in schwarze oder weiße Teilflächen erzeugt. Derartige Bilder werden außerdem mit Hilfe von Zeichengeneratoren hergestellt, in denen die weißen bzw. schwarzen Teilflächen erzeugt werden können. Bekannt ist es, aufgrund der Digitaltechnik 256 Elemente zu erzeugen, aus denen durch Ein- oder Ausschalten (Weißlassen oder Schwarzmachen) die entsprechenden Teilflächen erzeugt werden. Um jedoch auch verschiedene Helligkeitswerte darzustellen, wählt man außerdem einen bestimmen organisatorischen Aufbau, bei dem schwarze und weiße Teilflächen aneinandergrenzen, z.B. 128 Teilflächen, so daß im Prinzip eine Vielzahl von Helligkeitsstufen erzielt werden kann. Das gebräuchlichste Rasterverfahren ist das sog. Rundpunktraster, bei dem sich die Rasterpunktform mit Abnehmen der Helligkeit von einer kleinen schwarzen Kreisfläche über ein Quadrat (bei 50 % Helligkeit) zu einer Negativkreisfläche entwickelt. Über eine vorgegebene einheitliche Bezugsfläche kann daher durch Übertragung eines Rasterpunktes, bestehend aus mehreren Pixeln, in benachbarten Bezugsflächen ein größerer Rasterpunkt von kreisförmiger Begrenzung und in weiteren Bezugsflächen ein quadratischer oder sonstwie geformter, ebenfalls eine größere Fläche der Bezugsfläche abdeckender Rasterpunkt erzeugt werden. Bei digitaler Verwirklichung gibt es in der Regel 256 Bezugsflächen mit entsprechenden Rasterpunkten, wobei logische Zwischenschritte zu Bezugsflächen mit entsprechendem Abdeckung der gesamten Bezugsfläche führen.

Währenddem vorstehend sog. Rundpunktraster bzw. quadratische Raster erwähnt sind, sind auch andere Rasterformen möglich. Insbesondere sind elliptische und sog. Strichraster bekannt. Bei den bisher genannten Rasterarten geht das Muster für einen Rasterpunkt für die jeweils nächste Helligkeitsstufe aus dem Muster der aktuellen Helligkeitsstufe hervor. In diesem System wird für eine Weiterentwicklung ein Nachteil gesehen.

Im Prinzip kann ein Helligkeitsunterschied des Rasters durch entfernte, benachbarte Pixel erzeugt werden. Es ist jedoch auch möglich, durch Verteilung von mehreren Pixeln einen gleichen Helligkeitswert zu erzeugen, was von dem Abstand der Pixel abhängt. Drucktechnisch ist es jedoch vorteilhaft, zusammenhängende Pixel und damit Rasterpunkte von vorherbestimmter Form zu erzeugen. Die Pixel selbst können Jedoch auch jede durch die Erzeugungsmittel bestimmte Umrißform annehmen, so daß das Feld eines Rasterpunktes entsprechend gestaltet werden kann.

Eine noch in Analog-Schaltungstechnik gehaltene Ausführungsform eines Verfahrens zur Herstellung gerasteter Druckformen (DE-C2-28 27 596) stellt Raster beliebiger Rasterwinkel und Rasterweiten mittels eines relativ über ein Aufzeichnungsmedium bewegten Aufzeichnungsorgans dar, bei dem ein Raster aus einer Vielzahl von periodisch wiederholten Rastermaschen besteht (denen die vorstehend erläuterten Bezugsflächen entsprechen), in denen in Abhängigkeit von den Tonwerten der Vorlagen unterschiedlich große Rasterpunkte aufgezeichnet werden und bei dem das Aufzeichnungsmedium in eine Vielzahl von in Aufzeichnungsrichtung des Aufzeichnungsorgans ausgerichteten Flächenelementen unterteilt ist und die Rasterpunkte innerhalb der Rastermaschen aus vom Aufzeichnungsorgan aufgezeichneten Flächenelementen zusammengesetzt werden. Es ergibt sich bei diesem bekannten Verfahren jedoch eine Beschränkung der Rasterpunkt-Formen dadurch, daß eine Matrix mit einer Anzahl von Matrixelementen erzeugt und den einzelnen Matrixelementen Tonwerte darstellende Raster-Schwellwerte zugeordnet werden, welche die periodische Grundstruktur einer Rastermasche (Bezugsfläche) des Rasters repräsentieren. Dabei muß für jedes Flächenelement des Aufzeichnungsmediums innerhalb einer Rastermasche dasjenige Matrixelement festgestellt werden, dessen Lage innerhalb der Matrix der Lage des Flächenelementes innerhalb der betreffenden Rastermasche entspricht, und es muß der im festgestellten Matrixelement zugeordnete Raster-Schwellwert aufgerufen werden, wobei durch einen Signalvergleich zwischen dem die Tonwerte der Vorlagen repräsentierenden Bildsignale und den aufgerufenen Raster-Schwellwerten entschieden wird, ob das Flächenelement als Teil eines Rasterpunktes innerhalb der betreffenden Rastermasche aufgezeichnet wird oder nicht. Dieses System des Aufzeichnens oder Nichtaufzeichnens beschränkt die Anzahl der Rasterpunkt-Formen und bedingt, daß die Rasterform für eine Helligkeit aus der Rasterform für die nächste Helligkeitsstufe hervorgeht. Weiterhin ist es nach diesem Verfahren nicht möglich, beliebige Muster unabhängig von Helligkeiten zu bearbeiten.

Der im Anspruch 1 angegebenen Erfindung liegt das Problem zugrunde, ein Verfahren zum Erzeugen elektronischer Bilder (pixmaps) vorzuschlagen, das nicht nur nach Übertragung auf ein geeignetes Aufzeichnungsmedium als Druckform zur Reproduktion von digitalisierten Bildern geeignet ist, sondern auch eine feinstmögliche Abstufung von Tonwerten erlaubt, welche über die theoretisch mögliche Helligkeitsauflösung hinausgeht, welche sich aus der Rasterbezugsfläche, die wiederum aus der Rasterweite folgt, und der Auflösung des Aufzeichnungsmediums ergibt.

Die mit der Erfindung erzielten Vorteile bestehen insbesondere darin, daß nicht nur in den Helligkeitsschritten unabhängige Rasterpunkt-Formen, jede Rasterweite sowie jeder Rasterwinkel zur Reproduktion digitalisierter Bilder eingesetzt werden können, sondern dieses durch die Flexibilität des Verfahrens so geschehen kann, daß darüber hinausgehende drucktechnische Erfordernisse sowie technische Gegebenheiten der Reproduktionseinrichtung (z.B. Auflösung) optimal berücksichtigt werden und so eine genauestmögliche Wiedergabe der aufgenommenen Helligkeitswerte erfolgt.

Eine vorteilhafte Augestaltung der Erfindung ist im Anspruch 2 angegeben. Die Weiterbildung des Anspruches 2 besteht darin, daß aufgrund vorgegebener Helligkeits-Informationen eine Mischung der im Mustergenerator abgespeicherten Muster ausgegeben wird. Vorteilhaft ist hierbei, daß die Auflösung eines so reproduzierten Bildes für das menschliche Auge wesentlich höher erscheint, als dieses aufgrund der bekannten Rasterweite der Fall ist.

Nach weiteren Merkmalen ist vorgesehen, daß in dem Mustergenerator 256 Muster aus jeweils 128 x 128 Flächenelementen (Pixeln) abgespeichert werden. Die Anzahl der Muster und deren Größe bzw. Auflösung ist nur von der Größe eines Mustergenerator-RAMs abhängig.

Eine weitere Ausgestaltung der Erfindung wird in Anspruch 4 angegeben. Sie besteht darin, daß mit Hilfe von voneinander unabhängigen Mustern im Mustergenerator von Helligkeiten unabhängige Musterflächen generiert werden. Damit kann unabhängig von Bildvorlagen und unabhängig von Helligkeiten eine Bild-pixmap erzeugt werden, deren Inhalt sich beliebig wiederholende Muster sind, welche mit beliebiger Scalierung und beliebiger Winkelanordnung generiert werden. Diese Funktionalität kann z.B. für Hintergrundmuster, wie sie in einem Formularsatz üblich sind, ausgenutzt werden.

Nach einer anderen Ausgestaltung (Anspruch 5) ist vorgesehen, daß der Mustergenerator von einem imaginären Zeiger durchlaufen wird, wobei eine beliebige Scalierung in X- und Y-Richtung angewendet wird und daß parallel im Takt ein solches X-Y-Zeigerpaar durch eine Bildvorlage geführt wird, so daß die Bilddatenhelligkeiten die helligkeitsrelevanten Muster im Mustergenerator adressieren. Hierbei wird die erfindungsgemäße Funktionalität dadurch erreicht, daß für jedes Pixel des zu erzeugenden elektronischen Bildes (pixmap), d.h. für das kleinste anzusteuernde Flächenelement der zu erzeugenden Druckform, ein Takt erzeugt wird, mit dem imaginäre Zeiger in X- und Y-Richtung modulo zu den X- bzw. Y-Größen wiederholend durch den Mustergenerator laufen. Mit dem gleichen Takt wird ein ähnliches X/Y-Zeigerpaar durch die Daten einer Bilddatenmenge geführt und so für jede X/Y-Position des Bildes ein Helligkeitswert ausgelesen und dem Mustergenerator als Musterauswahladresse zugeführt. Somit kann aus dem Mustergenerator dasjenige BIT ausgelesen werden, welches entsprechend dem Fortschritt des Bildgenerierungsvorganges der Position im Pixel und des ausgewählten Musters gebraucht wird.

Durch die beliebig festlegbare Schrittweite, die jeder der vier Zeiger bei jedem Takt bzw. am Ende einer generierten Pixelspalte weitersetzt, ist es möglich, die Musterscalierung (Rasterweite), Musterwinkel und Bildscalierung festzulegen.

Vorteilhaft ist außerdem (Anspruch 6), daß die ein Muster repräsentierenden Daten einzelbitweise aus dem Mustergenerator ausgelesen werden, wobei der Mustergenerator jeweils durch eine Adresse, die sich aus drei Teilen zusammensetzt, adressiert wird, und zwar
a) durch eine X-Adresse,
b) durch eine Y-Adresse und
c) durch eine Musterselektionsadresse.

Man kann sich diesen Speicher als dreidimensionales würfelartiges Gebilde vorstellen, wobei in einer Fläche - gekennzeichet durch X und Y - jeweils ein beliebiges BIT-Muster abgespeichert werden kann. Es liegt eine beliebige Anzahl solcher zweidimensionaler Muster übereinander. Die Auswahl des entsprechenden Musters geschieht durch den dritten Teil der Adressierung einer Musterauswahl.

Die Erfindung umfaßt ferner eine digitale Schaltung zum Erzeugen von Bild-Informationen (pixmaps) über Raster beliebiger Rasterwinkel und Rasterweiten bzw. unterschiedlich große Rasterpunkte, mit zumindest einem Zeichengenerator und mit einem an diesen angeschlossenen Bilddatenspeicher. Bei Monitor-Systemen wird dementsprechend ein Bildwiederholungsspeicher eingesetzt.

Eine vorteilhafte Gestaltung der digitalen Schaltung besteht darin, daß für einen Schaltungsteil zum Scannen der Bildvorlage und für einen angeschlossenen Schaltungsteil der Bildausgabe jeweils eine synchron taktgesteuerte vertikale Punktausgabe als ein imaginärer Y-Zeiger und für die zeilenweise Ausgabe als ein imaginärer X-Zeiger vorgesehen ist, daß diese Taktsteuerung an einen Y-Adreßgenerator und einen X-Adreßgenerator angeschlossen ist, die mit dem Mustergenerator verbunden sind, daß ferner synchron zu den X-Y-Basis-Zeigern zwei aus der Taktsteuerung abgeleitete, den Mustergenerator in einem beliebigen Winkel in X- und Y-Richtung durchlaufenden imaginären Zeiger vorgesehen sind. Bei der Datengenerierung werden die X- und Y-Adresse von separaten Rechenwerken erzeugt, denen ein bestimmter Startwert vorliegt und in dem ein beliebiges Inkrement auf diesen Startwert kumuliert wird. Die Zeiger werden während der Generierung wie beschrieben laufend kumuliert und arbeiten zur entsprechenden X- bzw. Y-Größe des verwendeten Mustergenerators. Die Datenerzeugung erfolgt in Form einer Art Projektion. Es wird ausgegangen von der Größe des zu erzeugenden Bildes sowie der Auflösung des Schreibmediums.

Vorteilhafterweise ist dann noch vorgesehen, daß die Startwerte der Zeichengeneratorzeiger mit einem Zufallswert beaufschlagbar sind (Anspruch 8). Der Vorteil ist, daß Streifenbildungen im generierten Bild aufgrund von Rundungssprüngen vermieden werden.

Ein Ausführungsbeispiel der Erfindung ist in der Zeichnung dargestellt und wird im folgenden näher beschrieben. Es zeigen
- Fig. 1: eine strukturierte Bildvorlage,
- Fig. 2: eine Zeichengeneratorebene für die maximale Mustergröße, aufgelöst in Pixel,
- Fig. 3: ein projiziertes Zielbild in entsprechend scalierter Größe,
- Fig. 4: ein Blockschaltbild der digitalen Schaltung und
- Fig. 5: eine vergrößerte Darstellung eines Rasters, das aus einer Anzahl verschiedener Rastermuster besteht.

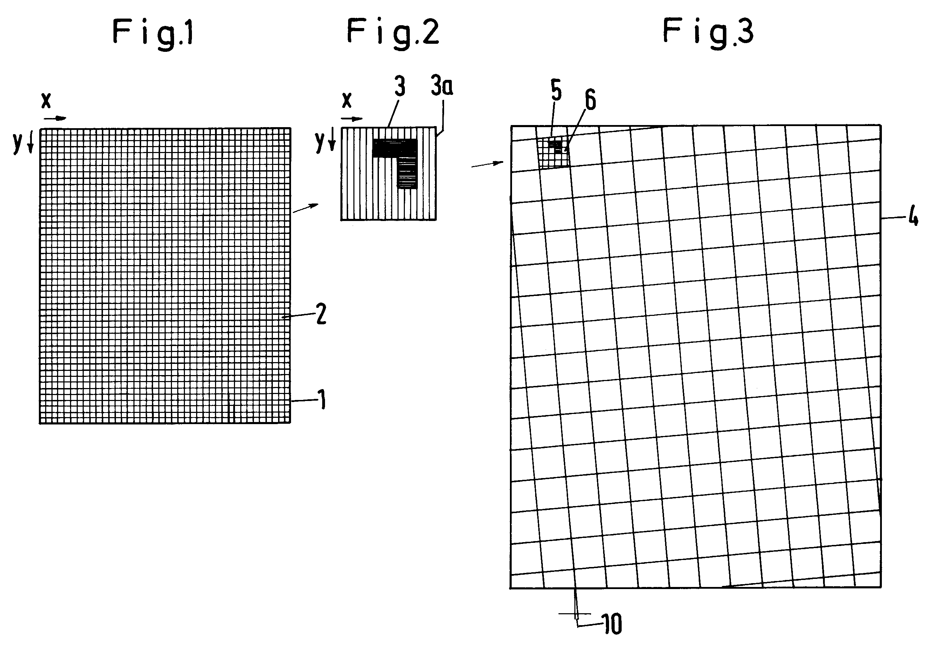

Gemäß Fig. 1 ist eine Bildvorlage 1 dargestellt, über die ein ideelles Netz aus einzelnen Elementen 2 gelegt ist. Jedem Element 2 entspricht eine durch Scannen ermittelte Helligkeitsinformation der Bildvorlage 1. Das Scannen der Bildvorlage 1 erfolgt wie links oben angegeben in X- und Y-Richtung.

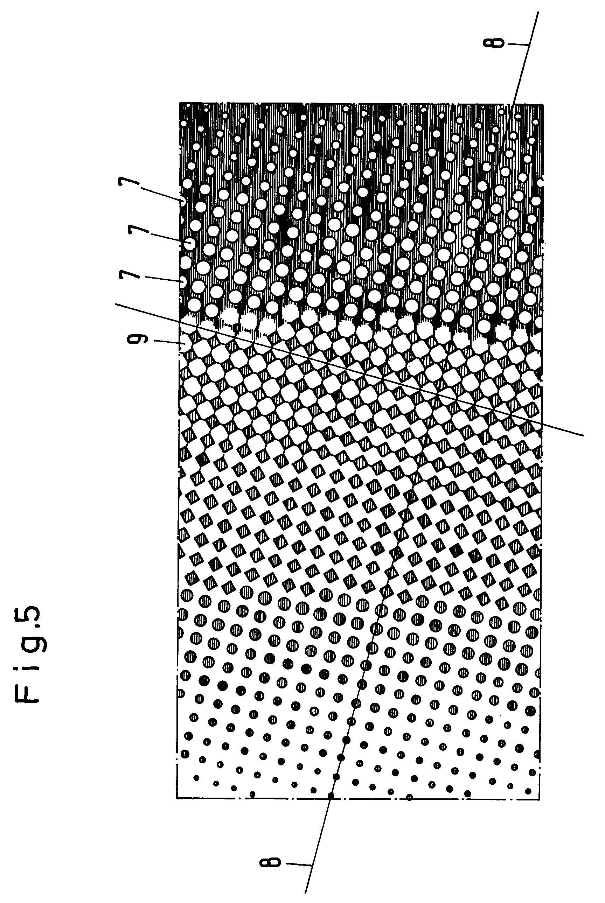

Sämtliche Helligkeiten der Elemente 2 sind mit dem Dateninhalt des Mustergenerators 3 erzeugbar (Fig. 2), von dem eine Ebene 3a dargestellt ist. Diese Ebene 3a beinhaltet eine maximale Rasterpunktgröße, d.h. Mustergröße, die in einzelne Pixel aufgelöst ist. Ein Pixel besitzt später in seiner Darstellung auf einem projizierten Zielbild 4 eine Größe zwischen 8 x 8 bzw. 16 x 16 µ. Ein Muster 5 besteht aus mehreren solcher Pixel, die aneinandergereiht eine Figur darstellen oder auch über Abstände eine entsprechende Helligkeit erzeugen. Ein solches Muster 5 kann ferner (Fig. 5) über den Verlauf in seiner Form, Lage und Zusammensetzung aus Pixeln geändert werden, wodurch ebenfalls Helligkeitsunterschiede erzeugt werden können.

Der Mustergenerator 3 ist in einer Einzel-bit-Organisation aufgebaut, so daß jegliches Flächenelement 6 bitweise berechnet und ausgewählt werden kann, und zwar derart, daß das abzubildende Flächenelement 6 identisch dem Element 2 der aus der vorgegebenen Bildvorlage 1 gewonnenen Helligkeitsinformation ist.

Es ist jedoch auch mögliche aufgrund der vorgegebenen Helligkeitsinformation eine Mischung der im Mustergenerator 3 abgespeicherten Muster 5 auszugeben. Der Mustergenerator 3 enthält generell 256 Muster aus 128 x 128 Flächen-Elementen, d.h.Pixeln, wobei jedes Pixel durch ein Bit dargestellt wird. Der Mustergenerator 3 enthält somit 4.194.304 Bit. Solche Muster 5 können Ketten 7 (Fig. 5) bilden, die aus schwarzen oder weißen Flächenelementen 6 bestehen und sich im Verlauf der Länge einer Kette 7 in Größe, Farbe oder Form wandeln. In Fig. 5 ist durch eine Reihe solcher Muster 5 eine Linie 8 gezeichnet. Ein Muster kann z.B. auch aus auf Spitzen 9 stehenden Teil-Flächenelementen 6 bestehen.

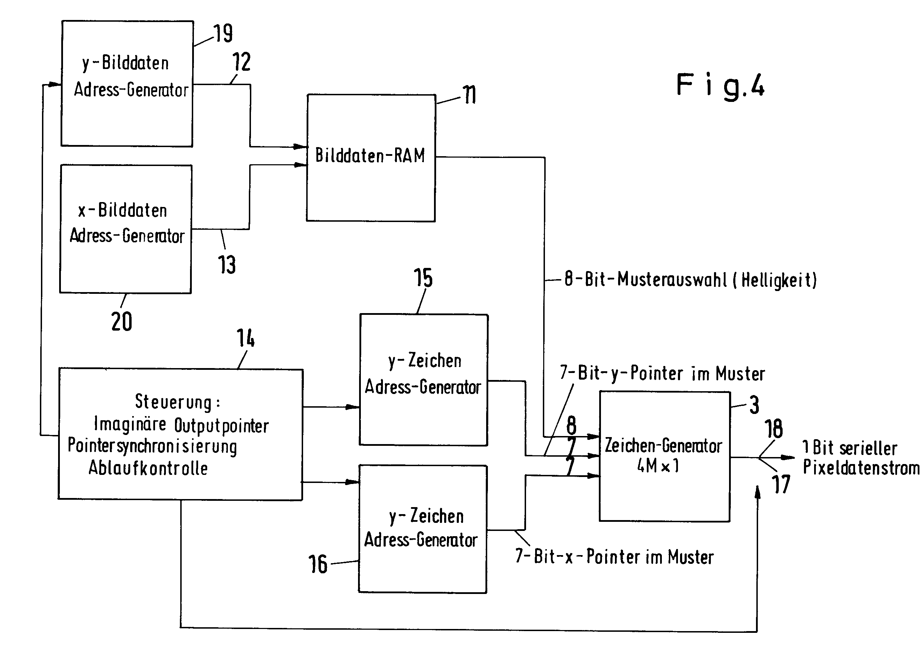

Eine digitale Schaltung (Fig. 4) zum Erzeugen von Bild-Informationen (pixmaps) über Muster 5 beliebiger Rasterwinkel 10 (Fig. 3) und Rasterweiten bzw. unterschiedlich großer Rasterpunkte (Muster 5) bedient sich eines speziellen Zeichengenerators, des Mustergenerators 3 und eines an diesem angeschlossenen Bilddatenspeichers 11.

Eine vorteilhafte Gestaltung der digitalen Schaltung besteht darin, daß eine Steuerung 14 einen imaginären Output-Pointer erzeugt, welcher entsprechend der Scanrichtung eines Aufzeichnungsmediums die Pixel-Daten erzeugt, indem für jeden zu erzeugenden Pixel ein Takt generiert wird, welcher vier Rechenwerken zugeführt wird, dem Y-Bilddaten-Adreßgenerator 19, dem X-Bilddaten-Adreßgenerator 20 sowie dem Y-Zeichenadreßgenerator 15 und dem X-Zeichenadreßgenerator 16.

Die X- und Y-Zeichenadreßgeneratoren 15 und 16 generieren je ein 24 Bit langes Datenwort. Diese Datenworte werden mit jedem Takt um einen beliebigen Betrag inkrementiert. Sie dienen als X- bzw. Y-Pointer für den Mustergenerator 3, wobei nur die höchstwertigen 7 Bit dieses Pointers als Adressen an den Mustergenerator 3 gelegt werden. Durch dieses Verfahren mit den beiden Pointern kann die X-Y-Ebene des Mustergenerators 3, d.h. ein Muster 5 in beliebigem Winkel durchlaufen werden.

Bei der Bildgenerierung arbeiten beide Pointer modulo zu sich selbst, womit die X-Y-Ebene des Mustergenerators 3 beliebig sich wiederholend durchlaufen werden kann.

Parallel zu dem vorstehenden Vorgang wird die Bilddatenmenge im BildRAM durch die X- und Y-Bildpointer analog zur Scanrichtung der zu erzeugenden Richtung abgescannt, welche von dem Y-Bilddaten-Adreßgenerator 19 bzw. dem X-Bilddaten-Adreßgenerator 20 erzeugt werden, wobei der Y-Bilddaten-Adreßgenerator 19 mit jedem Takt inkrementiert wird und der X-Bildpointer am Ende einer jeden Pixelspalte. Mit Hilfe des Maßes für die Inkrementierung kann das Bild beliebig scaliert werden.

Der Bilddaten-RAM 11 liefert aufgrund der Adressen über Leitungen 12 und 13 aus den Bilddaten-Adreßgeneratoren 19 und 20 für den aktuell zu generierenden Pixel eine Helligkeitsinformation, welche als Musterauswahladresse an den Mustergenerator 3 gelegt wird, so daß aufgrund der Adressen aus den X/Y-Zeichenadreßgeneratoren 15 und 16 und der Musterauswahladresse (Helligkeitsauswahl) das aktuell zur Bildgenerierung benötigte Bit aus dem Mustergenerator 3 ausgelesen werden kann. Der Mustergenerator 3 erzeugt durch einen 1-bit-seriellen Pixeldatenstrom 17 eine Bildausgabe 18.

## Patentansprüche

1. Verfahren zum Erzeugen von Bild-Informationen (pixmaps) über Raster aus Flächenelementen, deren Mittelpunkte eine Linie bilden, die unter einem Winkel zum Bildrand verläuft, ferner über Rasterweiten bzw. unterschiedlich große Raster, bei denen unterschiedliche Helligkeiten durch Aufteilen von Bezugsflächen in weiße oder schwarze Teilflächen dargestellt werden, aus denen ein Bild aufgebaut wird,
dadurch gekennzeichnet,
daß eine Vielzahl von Mustern (5) in einem Mustergenerator (3) in einer Einzel-bit-Organisation gespeichert wird und daß aus dem Mustergenerator (3) jeweils dasjenige Flächenelement (6) als Einzelbit ausgewählt wird, welches Element des Musters ist, dessen Helligkeit identisch zur vorgegebenen Helligkeitsinformation entsprechend dem Element (2) der Bildvorlage (1) ist und dessen Position im Muster (5) berechnet wird.

2. Verfahren nach Anspruch 1,
dadurch gekennzeichnet,
daß aufgrund vorgegebener Helligkeits-Informationen eine Mischung der im Mustergenerator (3) abgespeicherten Muster (5) ausgegeben wird.

3. Verfahren nach den Ansprüchen 1 oder 2,
dadurch gekennzeichnet,
daß in dem Mustergenerator (3) 256 Muster (5) aus jeweils 128 x 128 Flächenelementen (Pixeln) abgespeichert werden.

4. Verfahren nach den Ansprüchen 1 bis 3,
dadurch gekennzeichnet,
daß mit Hilfe von voneinander unabhängigen Mustern (5) im Mustergenerator (3) von Helligkeiten unabhängige Musterflächen generiert werden.

5. Verfahren nach einem der Ansprüche 1 bis 4,
dadurch gekennzeichnet,
daß der Mustergenerator (3) von einem imaginären Zeiger durchlaufen wird, wobei eine beliebige Scalierung in x- und y-Richtung angewendet wird und daß parallel im Takt ein solches X-Y-Zeigerpaar durch, eine Bildvorlage (1) geführt wird, so daß die Bilddatenhelligkeiten die helligkeitsrelevanten Muster (5) im Mustergenerator (3) adressieren.

6. Verfahren nach einem der Ansprüche 1 bis 5,
dadurch gekennzeichnet,
daß die ein Muster (5) repräsentierenden Daten einzelbitweise aus dem Mustergenerator (3) ausgelesen werden, wobei der Mustergenerator (3) jeweils durch eine Adresse, die sich aus drei Teilen zusammensetzt, adressiert wird, und zwar
a) durch eine X-Adresse,
b) durch eine Y-Adresse und
c) durch eine Musterselektionsadresse.

7. Digitale Schaltung zum Erzeugen von Bild-Informationen (pixmaps) über Raster beliebiger Rasterwinkel und Rasterweiten bzw. unterschiedlich große Rasterpunkte, mit zumindest einem Zeichengenerator und mit einem an diesen angeschlossenen Bilddatenspeicher,
dadurch gekennzeichnet,
daß für einen Schaltungsteil zum Scannen der Bildvorlage (1) und für einen angeschlossenen Schaltungsteil der Bildausgabe (18) jeweils eine synchron taktgesteuerte vertikale Punktausgabe als ein imaginärer Y-Zeiger und für die zeilenweise Ausgabe als ein imaginärer X-Zeiger vorgesehen ist, daß diese Taktsteuerung (14) an einen Y-Adreßgenerator (15) und einen X-Adreßgenerator (16) angeschlossen ist, die mit dem Mustergenerator (3) verbunden sind, daß ferner synchron zu den X-Y-Basis-Zeigern zwei aus der Taktsteuerung (14) abgeleitete, den Mustergenerator (3) in einem beliebigen Winkel in X- und Y-Richtung durchlaufenden imaginären Zeiger vorgesehen sind.

8. Digitale Schaltung nach Anspruch 7,
dadurch gekennzeichnet,
daß die Startwerte der Zeichengeneratorzeiger mit einem Zufallswert beaufschlagbar sind.
